# EUROPEAN PATENT APPLICATION

(11) **EP 1 764 958 A1**
(43) Date of publication of application: **21.03.2007**
(21) Application number: 05755191.3
(22) Date of filing: 28.06.2005
(51) Int. Cl.: H04L 12/56, H04M 15/00

(54) **COMMUNICATION CHARGE CALCULATION SYSTEM FOR MOBILE TELEPHONE COMMUNICATIONS, COMMUNICATION CHARGE CALCULATION METHOD, INFORMATION SERVER, MOBILE TELEPHONE TERMINAL, AND PROGRAMS THEREFOR**

(30) Priority: 29.06.2004 JP 2004190619
(71) Applicant: NEC CORPORATION, Minato-ku, Tokyo 108-8001 (JP)
(72) Inventor: UEMATSU, Akira, , Tokyo, 1088001 (JP); KURASHIMA, Akihisa, , Tokyo, 1088001 (JP)
(74) Representative: Betten, Jürgen
(86) International application number: PCT/JP2005/011858
(87) International publication number: WO 2006/001454

(57) **Abstract**

A mobile telephone terminal (103) notifies an information server of information on incoming data received from a gateway device (102). The information server (104) calculates the communication rate in a mobile telephone network (101) by means of a communication rate calculation equation for the calculation, from the quantity of the outgoing data received from the mobile telephone terminal (103) through the gateway device (102), the information on the incoming data notified from the mobile telephone terminal (103), and the quantity of data for the communications with the mobile telephone terminal (103), and determines the charge for the communication rate calculated.

## Description

### [APPLICABLE FIELD IN THE INDUSTRY]

The present invention relates to a technology for, in information communications using a mobile telephone terminal, calculating a communication charge in the case that the mobile telephone terminal utilizes an information server, and more particularly to a technology for a communication charge calculation of which an error with charging by a mobile telephone enterpriser is small.

### [BACKGROUND ART]

The remarkable progress in an information communication function and an information process ability of the mobile terminal, specially, the mobile telephone terminal enables a highly developed information process accompanied by the communications to be performed by the mobile terminal, and the instance that an information service, which an enterprise has provided for aiming for a personal computer within the enterprise, is utilized by the mobile telephone terminal is increasing.

With a personal contract such that a user itself of the mobile telephone terminal makes a contract with the mobile telephone enterpriser, the cost necessary for communications is charged for a user by the mobile telephone enterprise in a case of using the information service of the enterpriser as a business by the mobile telephone terminal.

However, the cost necessary for utilizing the information server of the enterprise as a business by the mobile telephone is originally a cost that the enterprise should bear, which requires a function of "business/private account" that allows such a communication cost to be paid back for the user, and for this, the system is necessitated for accurately calculating the communication charge between the mobile telephone and the information server.

The method of calculating the communication charge by means of a proxy server is disclosed as a method of calculating the communication charge in the communication system employing the mobile telephone terminal (for example, Patent document 1).

The method of calculating the communication charge that is disclosed in the patent document 1 will be explained below.

Fig. 13 illustrates a configuration of the communication system disclosed in the patent document 1, and its communication system is configured of a mobile telephone 1301, information servers 1302, and a proxy server 1303 for settling communications between the mobile telephone 1301 and the information server 1302.

Each information server 1302 is given a server name, and in a case where the mobile telephone 1301 makes communications with the information server 1302, it acquires a communication rate at which the mobile telephone 1301 has made communications, and the server name of the information server 1302, being a communication partner, in the proxy server 1303.

The proxy server 1303 classifies the communications between the mobile telephone 1301 and the information server 1302 into the private communications and the business communications by means of the server name. The proxy server 1303, which has information of a service charge system of the mobile telephone 1301, calculates the private communication charge and the business communication charge for each mobile telephone by means of the communication rate and the server name.
[Patent document 1] JP-P2003-179705

### [DISCLOSURE OF THE INVENTION]

### [PROBLEMS TO BE SOLVED BY THE INVENTION]

In the method of the business/private account disclosed in the Patent document 1, the mobile telephone makes communications with the information server with the proxy server as a relay, and the proxy server calculates the communication cost based upon the communication rate of communications that the proxy server relays. In actual communications by the mobile telephone, however, the mobile telephone makes communications with the outside through a gateway device that the mobile telephone enterpriser installs, and an object of the charging by the mobile telephone enterpriser is a communication rate of communications between the gateway device and the mobile telephone.

In the business/private account technique of the Patent document 1, in a case of transmitting information from the proxy server to the mobile telephone, information from the proxy server is terminated by the gateway device, and information is transmitted from the gateway device to the mobile telephone; however in a case where, for example, the mobile telephone that is migrating in a train has requested information of the information server, and thereafter, the information server has transmitted information to the mobile telephone at a timing at which the mobile telephone has come into a state of being incommunicable, for example, has entered a tunnel etc., the proxy server relays information from the information server to transmit it to the gateway device, but the communications with the mobile telephone is not made actually by the gateway. In such a case, the proxy server calculates/sums up the communication charge based upon the communications with the gateway; however as a matter of fact, the charging thereof by the mobile telephone enterpriser is not made, which gives rise to an error between the computation result by the proxy server and the charging by the mobile telephone enterpriser.

Further, in the method of the communication charge calculation disclosed in the patent document 1, the communication charge is calculated based upon the quantity of data that the proxy server transmitted/received to/from the mobile telephone; however in the actual communications of the mobile telephone, an overhead of the communications as well within the mobile telephone network that cannot be measured by the proxy server, for example, an establishment of a connection between the mobile telephone and the gateway device, or the like becomes an object of the charging. In the communication charge calculation system of the patent document 1 that does not take these overheads into consideration, an error with the charging by the mobile telephone enterpriser becomes yet larger.

Thereupon, the task that is to be solved by present invention is solved by providing the communication charge calculation system that allows the communication charge in the case that the mobile telephone utilizes the information server in information communications employing the mobile telephone to be calculated with a small error as against the charging by the mobile telephone enterpriser, which has been invented in consideration of the above-mentioned problems.

### [MEANS TO SOLVE THE PROBLEM]

The first invention for solving the above-mentioned task, which is a communication charge calculation system for mobile telephone communications that is configured of a mobile telephone network, a mobile telephone terminal making a connection with the mobile telephone network, a gateway device that is installed into the mobile telephone network, and an information server, in which the mobile telephone terminal makes communications with the information server through the gateway device, and the information server calculates a use charge of the mobile telephone network necessary for communications between the information server and the mobile telephone terminal, is characterized in that: the mobile telephone terminal notifies information on incoming data received from the gateway device to the information server; the information server has a communication rate calculation equation for, from the quantity of the data for communications with the mobile telephone terminal, calculating the communication rate in the mobile telephone network, and calculates the communication rate in the mobile telephone network by means of the communication rate calculation equation, from a quantity of outgoing data received from the mobile telephone terminal through the gateway device, and the information on the incoming data that is notified from the mobile telephone terminal, thereby to calculate the use charge.

The second invention for solving the above-mentioned task, which is a communication charge calculation system for mobile telephone communications that is configured of a mobile telephone network, a mobile telephone terminal making a connection with said mobile telephone network, a gateway device that is installed into said mobile telephone network, and an information server, in which said information server and said mobile telephone terminal make communications with each other through said gateway device, and said information server calculates a use charge of the mobile telephone network necessary for communications between said information server and said mobile telephone terminal, characterized in that: said gateway device notifies information on incoming data transmitted to said mobile telephone terminal from said gateway device to said information server; said information server: has a communication rate calculation equation for calculating a communication rate in said mobile telephone network from a quantity of data for communications with said mobile telephone terminal; and calculates the communication rate in said mobile telephone network by means of said communication rate calculation equation, from a quantity of outgoing data received from said mobile telephone terminal through said gateway device, and said information on said incoming data that is notified from said gateway device, thereby to calculate the use charge.

The third invention for solving the above-mentioned task, which is a communication charge calculation system for mobile telephone communications that is configured of two mobile telephone networks or more, a mobile telephone terminal making a connection with each of said mobile telephone networks, a gateway device that is installed into each of said two mobile telephone networks or more, and an information server, in which said mobile telephone terminal makes communications with said information server through said gateway device installed in the mobile telephone network with which the mobile telephone terminal makes a connection, and said information server calculates a use charge of the mobile telephone network necessary for communications between said information server and said mobile telephone terminal, characterized in that: said information server has: means for, in communications with said mobile telephone terminal, specifying said mobile telephone network with which the mobile telephone terminal makes a connection; and further, a communication rate calculation equation for, for each of said two mobile telephone networks or more, calculating a communication rate in the mobile telephone network from a quantity of data for communications with said mobile telephone terminal making a connection with the mobile telephone network; said mobile telephone terminal notifies to said information server information on incoming data received from said gateway device installed into the mobile telephone network with which the mobile telephone terminal makes a connection; and said information server calculates the communication rate in said mobile telephone network by means of said communication rate calculation equation that corresponds to said mobile telephone network with which the mobile telephone terminal makes a connection, from a quantity of outgoing data received from said mobile telephone terminal through said gateway device, and said information on said incoming data, thereby to calculate the use charge.

The fourth invention for solving the above-mentioned task, which is a communication charge calculation system for mobile telephone communications that is configured of two mobile telephone networks or more, a mobile telephone terminal making a connection with each of said mobile telephone networks, a gateway device that is installed into each of said two mobile telephone networks or more, and an information server, in which said mobile telephone terminal makes communications with said information server through said gateway device installed in the mobile telephone network with which the mobile telephone terminal makes a connection, and said information server calculates a use charge of the mobile telephone network necessary for communications between said information server and said mobile telephone terminal, characterized in that: said information server has: means for, in communications with said mobile telephone terminal, specifying said mobile telephone network with which the mobile telephone terminal makes a connection; and further, a communication rate calculation equation for, for each of said two mobile telephone networks or more, calculating a communication rate in the mobile telephone network from a quantity of data for communications with said mobile telephone terminal making a connection with the mobile telephone network; said gateway device notifies to said information server information on incoming data transmitted to said mobile telephone terminal making a connection with said mobile telephone network having the gateway device installed; and said information server calculates the communication rate in the mobile telephone network by means of said communication rate calculation equation that corresponds to said mobile telephone network with which the mobile telephone terminal makes a connection, from a quantity of outgoing data received from said mobile telephone terminal through said gateway device, and said information on said incoming data, thereby to calculate the use charge.

The fifth invention for solving the above-mentioned problem, in one of the above-mentioned first to fourth inventions, is characterized in that: the incoming data that is transmitted from said information server to said mobile telephone terminal is accompanied by an information identifier for identifying the incoming data, and said information on said incoming data is said information identifier accompanying said incoming data that said mobile telephone terminal has successfully received last; in a case of having transmitted the incoming data to said mobile telephone terminal, said information server stores said information identifier accompanying the incoming data, and size of the data; and in a case of having received said information on said incoming data from said mobile telephone terminal, said information server calculates the communication rate in said mobile telephone network by the said communication rate calculation equation, from said stored size of said data, and deletes said information identifier from the storage in a case where the information identifier has coincided with said stored information identifier.

The sixth invention for solving the above-mentioned problem, in one of the above-mentioned first to fourth inventions, is characterized in that: the incoming data that is transmitted from said information server to said mobile telephone terminal is accompanied by an information identifier for identifying the incoming data, and said information on said incoming data is said information identifier accompanying the incoming data that said mobile telephone terminal has received last, and the received quantity of the incoming data; in a case of having transmitted the incoming data to said mobile telephone terminal, said information server stores said information identifier accompanying the incoming data; and in a case of having received said information on said incoming data from said mobile telephone terminal, said information server calculates the communication rate in said mobile telephone network by means of said communication rate calculation equation, from the amount of the data, and deletes said information identifier from the storage in a case where the information identifier has coincided with said stored information identifier.

The seventh invention for solving the above-mentioned task, which is a communication charge calculation system for mobile telephone communications that is configured of a mobile telephone network, a mobile telephone terminal making a connection with said mobile telephone network, a gateway device that is installed into said mobile telephone network, and an information server, in which said mobile telephone terminal makes communications with said information server through said gateway device, and said information server calculates a use charge of the mobile telephone network necessary for communications between said information server and said mobile telephone terminal, characterized in that: said mobile telephone terminal includes the means for: at the time of transmitting data, transmitting a terminal identifier for identifying its own terminal; and transmitting information on incoming data received from said gateway device to said information server; and said information server has means for calculating a communication rate in said mobile telephone network based upon a communication rate calculation equation for calculating the communication rate of the mobile telephone terminal, which is specified by said terminal identifier, in said mobile telephone network, a quantity of outgoing data received from said mobile telephone terminal through said gateway device, and a quantity of the incoming data that is obtained from the information on the incoming data that is notified from said mobile telephone terminal, thereby to calculate the use charge for said mobile telephone terminal.

The eighth invention for solving the above-mentioned task, which is a communication charge calculation system for mobile telephone communications that is configured of a mobile telephone network, a mobile telephone terminal making a connection with said mobile telephone network, a gateway device that is installed into said mobile telephone network, and an information server, in which said information server and said mobile telephone terminal make communications with each other through said gateway device, and said information server calculates a use charge of the mobile telephone network necessary for communications between said information server and said mobile telephone terminal, characterized in that: said mobile telephone terminal includes means for, at the time of transmitting data, transmitting a terminal identifier for identifying its own terminal; said gateway device has means for notifying to said information server information on incoming data transmitted to said mobile telephone terminal from its own device; and said information server has means for calculating a communication rate in said mobile telephone network based upon a communication rate calculation equation for calculating the communication rate of the mobile telephone terminal, which is specified by said terminal identifier, in said mobile telephone network, a quantity of outgoing data received from said mobile telephone terminal through said gateway device, and a quantity of the incoming data that is obtained from said incoming data that is notified from said gateway device, thereby to calculate the use charge for said mobile telephone terminal.

The ninth invention for solving the above-mentioned task, which is a communication charge calculation system for mobile telephone communications that is configured of two mobile telephone networks or more, a mobile telephone terminal making a connection with each of said mobile telephone networks, a gateway device that is installed into each of said two mobile telephone networks or more, and an information server, in which said mobile telephone terminal makes communications with said information server through said gateway device installed into the mobile telephone network with which the mobile telephone terminal makes a connection, and said information server calculates a use charge of the mobile telephone network necessary for communications between said information server and said mobile telephone terminal, characterized in that: said mobile telephone terminal includes the means for: at the time of transmitting data, transmitting a terminal identifier for identifying its own terminal; and notifying to said information server information on incoming data received from said gateway device installed into the mobile telephone network with which the mobile telephone terminal makes a connection; and said information server has the means for: in communications with said mobile telephone terminal, specifying said mobile telephone network with which the mobile telephone terminal makes a connection; and calculating a communication rate in the mobile telephone network based upon a quantity of outgoing data received from said mobile telephone terminal through said gateway device, said information on said incoming data, and a communication rate calculation equation that corresponds to said mobile telephone network with which the mobile telephone terminal that is specified by said terminal identifier makes a connection, thereby to calculate the use charge for said mobile telephone terminal.

The tenth invention for solving the above-mentioned task, which is a communication charge calculation system for mobile telephone communications that is configured of two mobile telephone networks or more, a mobile telephone terminal making a connection with each of said mobile telephone networks, a gateway device that is installed into each of said two mobile telephone networks or more, and an information server, in which said mobile telephone terminal makes communications with said information server through said gateway device installed into the mobile telephone network with which the mobile telephone terminal makes a connection, and said information server calculates a use charge of the mobile telephone network necessary for communications between said information server and said mobile telephone terminal, characterized in that: said mobile telephone terminal includes the means for, at the time of transmitting data, transmitting a terminal identifier for identifying its own terminal; said gateway device has means for notifying to said information server information on incoming data transmitted to said mobile telephone terminal making a connection with said mobile telephone network having the gateway device installed; and said information server has the means for: in communications with said mobile telephone terminal, specifying said mobile telephone network with which the mobile telephone terminal makes a connection; and calculating a communication rate in the mobile telephone network based upon a quantity of outgoing data received from said mobile telephone terminal through said gateway device, said information on said incoming data, and a communication rate calculation equation that corresponds to said mobile telephone network with which the mobile telephone terminal that is specified by said terminal identifier makes a connection, thereby to calculate the use charge.

The eleventh invention for solving the above-mentioned problem, in one of the above-mentioned seventh to tenth inventions, is characterized in that: the incoming data that is transmitted from said information server to said mobile telephone terminal is accompanied by an information identifier for identifying the incoming data; said information on said incoming data is said information identifier accompanying said incoming data that said mobile telephone terminal has successfully received last; and said information server has means for, in a case of having transmitted the incoming data to said mobile telephone terminal, storing said information identifier accompanying the incoming data and size of the data, and for, in a case of having received said information on said incoming data from said mobile telephone terminal, calculating a communication rate in said mobile telephone network by means of said communication rate calculation equation, from said stored size of said data, and deleting said information identifier from the storage in a case where the information identifier has coincided with said stored information identifier.

The twelfth invention for solving the above-mentioned problem, in one of the above-mentioned seventh to tenth inventions, is characterized in that: the incoming data that is transmitted from said information server to said mobile telephone terminal is accompanied by an information identifier for identifying the incoming data; said information on said incoming data is said information identifier accompanying the incoming data that said mobile telephone terminal has received last, and the received quantity of the incoming data; and said information server has means for, in a case of having transmitted the incoming data to said mobile telephone terminal, storing said information identifier accompanying the data, and for, in a case of having received said information on said incoming data from said mobile telephone terminal, calculating a communication rate in said mobile telephone network by means of said communication rate calculation equation, from the quantity of the data, and deleting said information identifier from the storage in a case where the information identifier has coincided with said stored information identifier.

The thirteenth invention for solving the above-mentioned task, which is a communication charge calculation method for mobile telephone communications in a communication system that is configured of a mobile telephone network, a mobile telephone terminal making a connection with said mobile telephone network, a gateway device that is installed into said mobile telephone network, and an information server, in which said mobile telephone terminal makes communications with said information server through said gateway device, and said information server calculates a use charge of the mobile telephone network necessary for communications between said information server and said mobile telephone terminal, characterized in that: information on incoming data received from said gateway device is notified to said information server from said mobile telephone terminal; and a communication rate in said mobile telephone network is calculated by said information server by means of a communication rate calculation equation for calculating the communication rate in said mobile telephone network, from a quantity of outgoing data received from said mobile telephone terminal through said gateway device, the information on the incoming data that is notified from said mobile telephone terminal, and a quantity of data for communications with said mobile telephone terminal, thereby to calculate the use charge.

The fourteenth invention for solving the above-mentioned task, which is a communication charge calculation method for mobile telephone communications in a communication system that is configured of a mobile telephone network, a mobile telephone terminal making a connection with said mobile telephone network, a gateway device that is installed into said mobile telephone network, and an information server, in which said information server and said mobile telephone terminal make communications with each other through said gateway device, and said information server calculates a use charge of the mobile telephone network necessary for communications between said information server and said mobile telephone terminal, characterized in that: information on incoming data transmitted to said mobile telephone terminal is notified to said information server from said gateway device; and a communication rate in said mobile telephone network is calculated by said information server by means of a communication rate calculation equation for calculating the communication rate in said mobile telephone network, from a quantity of outgoing data received from said mobile telephone terminal through said gateway device, said information on said incoming data that is notified from said gateway device, and a quantity of data for communications with said mobile telephone terminal, thereby to calculate the use charge.

The fifteenth invention for solving the above-mentioned task, which is a communication charge calculation method for mobile telephone communications in a communication system that is configured of two mobile telephone networks or more, a mobile telephone terminal making a connection with each of said mobile telephone networks, a gateway device that is installed into each of said two mobile telephone networks or more, and an information server, in which said mobile telephone terminal makes communications with said information server through said gateway device installed into the mobile telephone network with which the mobile telephone terminal makes a connection, and said information server calculates a use charge of the mobile telephone network necessary for communications between said information server and said mobile telephone terminal, characterized in that: in communications with said mobile telephone terminal, said mobile telephone network with which the mobile telephone terminal makes a connection is specified by said information server; said mobile telephone terminal notifies to said information server information on incoming data received from said gateway device installed into the mobile telephone network with which the mobile telephone terminal makes a connection; and a communication rate in the mobile telephone network is calculated by said information server by means of a communication rate calculation equation for calculating the communication rate in the mobile telephone network, from a quantity of outgoing data received from said mobile telephone terminal through said gateway device, said information on said incoming data, and a quantity of data for communications with said mobile telephone terminal making a connection with the mobile telephone network for each of said two mobile telephone networks or more, thereby to calculate the use charge.

The sixteenth invention for solving the above-mentioned task, which is a communication charge calculation method for mobile telephone communications in a communication system that is configured of two mobile telephone networks or more, a mobile telephone terminal making a connection with each of said mobile telephone networks, a gateway device that is installed into each of said two mobile telephone networks or more, and an information server, in which said mobile telephone terminal makes communications with said information server through said gateway device installed into the mobile telephone network with witch the mobile telephone terminal makes a connection, and said information server calculates a use charge of the mobile telephone network necessary for communications between said information server and said mobile telephone terminal, characterized in that: in communications with said mobile telephone terminal, said mobile telephone network with which the mobile telephone terminal makes a connection is specified by said information server; information on incoming data transmitted to said mobile telephone terminal making a connection with said mobile telephone network having the gateway device installed is notified to said information server from said gateway device; and said information server calculates a communication rate in the mobile telephone network by means of a communication rate calculation equation for calculating the communication rate in the mobile telephone network, from a quantity of outgoing data received from said mobile telephone terminal through said gateway device, said information on said incoming data, and a quantity of data for communications with said mobile telephone terminal making a connection with the mobile telephone network for each of said two mobile telephone networks or more, thereby to calculate the use charge.

The seventeenth invention for solving the above-mentioned problem, in one of the above-mentioned thirteenth to sixteenth inventions, is characterized in that: the incoming data that is transmitted from said information server to said mobile telephone terminal is accompanied by an information identifier for identifying the incoming data; said information on said incoming data is said information identifier accompanying said incoming data that said mobile telephone terminal has successfully received last; in a case of having transmitted the incoming data to said mobile telephone terminal, said information server stores said information identifier accompanying the incoming data, and size of the data; and
in a case of having received said information on said incoming data from said mobile telephone terminal, said information server calculates a communication rate in said mobile telephone network by means of said communication rate calculation equation, from said stored size of said data, and deletes said information identifier from the storage in a case where the information identifier has coincided with said stored information identifier.

The eighteenth invention for solving the above-mentioned problem, in one of the above-mentioned thirteenth to sixteenth inventions, is characterized in that: the incoming data that is transmitted from said information server to said mobile telephone terminal is accompanied by an information identifier for identifying the incoming data; said information on said incoming data is said information identifier accompanying said incoming data that said mobile telephone terminal has received last, and the received quantity of the incoming data; in a case of having transmitted the incoming data to said mobile telephone terminal, said information server stores said information identifier accompanying the data; and in a case of having received said information on said incoming data from said mobile telephone terminal, said information server calculates a communication rate in said mobile telephone network by means of said communication rate calculation equation, from the quantity of the data, and deletes said information identifier from the storage in a case where the information identifier has coincided with said stored information identifier.

The nineteenth invention for solving the above-mentioned task, which is an information server in a communication system that is configured of a mobile telephone network, a mobile telephone terminal making a connection with said mobile telephone network, a gateway device that is installed into said mobile telephone network, and an information server, in which said mobile telephone terminal makes communications with said information server through said gateway device, and said information server calculates a use charge of the mobile telephone network necessary for communications between said information server and said mobile telephone terminal, characterized in having means for calculating a communication rate in said mobile telephone network by means of a communication rate calculation equation for calculating the communication rate in said mobile telephone network based upon a quantity of data for communications with said mobile telephone terminal, from a quantity of outgoing data received from said mobile telephone terminal through said gateway device, and information on incoming data that is notified from said mobile telephone terminal, or said information on said incoming data that is notified from said gateway device, thereby to calculate the use charge.

The twentieth invention for solving the above-mentioned task in the above-mentioned nineteenth inventions is characterized in that: having means for specifying the mobile telephone network with which the mobile telephone terminal makes a connection; and calculating the use charge by means of the communication rate calculation equation that corresponds to the specified mobile telephone network.

The twenty-first invention for solving the above-mentioned task in the above-mentioned nineteenth or twentieth inventions is characterized in that: the incoming data that is transmitted from said information server to said mobile telephone terminal is accompanied by an information identifier for identifying the incoming data, and said information on said incoming data is said information identifier accompanying said incoming data that said mobile telephone terminal has successfully received last; in a case of having transmitted the incoming data to said mobile telephone terminal, said information server stores said information identifier accompanying the incoming data, and size of the data; and in a case of having received said information on said incoming data from said mobile telephone terminal, said information server calculates a communication rate in said mobile telephone network by means of said communication rate calculation equation, from said stored size of said data, and deletes said information identifier from the storage in a case where the information identifier has coincided with said stored information identifier.

The twenty-second invention for solving the above-mentioned task in the above-mentioned nineteenth or twentieth inventions is characterized in that: the incoming data that is transmitted from said information server to said mobile telephone terminal is accompanied by an information identifier for identifying the incoming data, and said information on said incoming data is said information identifier accompanying the incoming data that said mobile telephone terminal has received last, and the received quantity of the incoming data; in a case of having transmitted the incoming data to said mobile telephone terminal, said information server stores said information identifier accompanying the incoming data; and in a case of having received said information on said incoming data from said mobile telephone terminal, said information server calculates a communication rate in said mobile telephone network by means of said communication rate calculation equation, from the quantity of the data, and deletes said information identifier from the storage in a case where the information identifier has coincided with said stored information identifier.

The twenty-third invention for solving the above-mentioned task, which is a mobile telephone terminal in a communication system that is configured of a mobile telephone network, the mobile telephone terminal making a connection with said mobile telephone network, a gateway device that is installed into said mobile telephone network, and an information server, in which said mobile telephone terminal makes communications with said information server through said gateway device, and said information server calculates a use charge of the mobile telephone network necessary for communications between said information server and said mobile telephone terminal, characterized in having the means for: at the time of transmitting data, transmitting a terminal identifier for identifying its own terminal; and transmitting information on received incoming data to said information server.

The twenty-fourth invention for solving the above-mentioned task, which is a program of an information server in a communication system that is configured of a mobile telephone network, a mobile telephone terminal making a connection with said mobile telephone network, a gateway device that is installed into said mobile telephone network, and the information server, in which said mobile telephone terminal makes communications with said information server through said gateway device, and said information server calculates a use charge of the mobile telephone network necessary for communications between said information server and said mobile telephone terminal, characterized in causing said information server to execute a process of calculating a communication rate in said mobile telephone network by means of a communication rate calculation equation for calculating the communication rate in said mobile telephone network based upon a quantity of data for communications with said mobile telephone terminal, from a quantity of outgoing data received from said mobile telephone terminal through said gateway device, and information on incoming data that is notified from said mobile telephone terminal, or said information on said incoming data that is notified from said gateway device, thereby to calculate the use charge.

The twenty-fifth invention for solving the above-mentioned task in the above-mentioned twenty-fourth inventions is characterized in causing said information server to execute a process of specifying the mobile telephone network with which the mobile telephone terminal makes a connection, and calculating the use charge by means of the communication rate calculation equation that corresponds to the specified mobile telephone network.

The twenty-sixth invention for solving the above-mentioned task in the above-mentioned twenty-fourth or twenty-fifth inventions is characterized in: that the incoming data that is transmitted from said information server to said mobile telephone terminal is accompanied by an information identifier for identifying the incoming data, and said information on said incoming data is said information identifier accompanying said incoming data that said mobile telephone terminal has successfully received last; and causing said information server to execute the processes of: in a case of having transmitted the incoming data to said mobile telephone terminal, storing said information identifier accompanying the incoming data, and size of the data; and in a case of having received said information on said incoming data from said mobile telephone terminal, calculating the communication rate in said mobile telephone network by means of said communication rate calculation equation, from said stored size of said data, and deleting said information identifier from the storage in a case where the information identifier has coincided with said stored information identifier.

The twenty-seventh invention for solving the above-mentioned task in the above-mentioned twenty-fourth or twenty-fifth inventions is characterized in: that the incoming data that is transmitted from said information server to said mobile telephone terminal is accompanied by an information identifier for identifying the incoming data, and said information on said incoming data is said information identifier accompanying the incoming data that said mobile telephone terminal has received last, and the received quantity of the incoming data; and causing said information server to execute the processes of: in a case of having transmitted the incoming data to said mobile telephone terminal, storing said information identifier accompanying the incoming data; and in a case of having received said information on said incoming data from said mobile telephone terminal, calculating the communication rate in said mobile telephone network by means of said communication rate calculation equation, from the quantity of data, and deleting said information identifier from the storage in a case where the information identifier has coincided with said stored information identifier.

The twenty- eighth invention for solving the above-mentioned task, which is a program of a mobile telephone terminal in a communication system that is configured of the mobile telephone network, a mobile telephone terminal making a connection with said mobile telephone network, a gateway device that is installed into said mobile telephone network, and an information server, in which said mobile telephone terminal makes communications with said information server through said gateway device, and said information server calculates a use charge of the mobile telephone network necessary for communications between said information server and said mobile telephone terminal, characterized in causing said mobile telephone terminal to execute a process of: at the time of transmitting data, transmitting a terminal identifier for identifying its own terminal; and transmitting information on received incoming data to said information server.

### [EFFECTS OF THE INVENTION]

The present invention enables an error to be lessened between the calculation of the communication charge in communications between the information server and the mobile telephone terminal, and the charging by the mobile telephone enterpriser. The reason is that not information of data transmitted by the information server to the gateway device, but information of data transmitted to the mobile telephone terminal from the gateway device, which becomes an object of the actual charging by the mobile telephone enterpriser, is employed as incoming data information to be transmitted to the mobile telephone terminal from the information server, which becomes a source of the communication rate calculation.

### [BRIEF DESCRIPTION OF THE DRAWINGS]

[Fig. 1] Fig. 1 is a block diagram illustrating a configuration example of the communication charge calculation system in an embodiment 1 of the present invention.
[Fig. 2] Fig. 2 is a block diagram illustrating a configuration of the mobile telephone terminal of the communication charge calculation system in the embodiment 1 of the present invention.
[Fig. 3] Fig. 3 is a block diagram illustrating a configuration of the information server of the communication charge calculation system in the present invention.
[Fig. 4] Fig. 4 is a sequence view illustrating a procedure in the embodiment 1 of the present invention.
[Fig. 5] Fig. 5 is a sequence view illustrating a procedure in an embodiment 2 of the present invention.
[Fig. 6] Fig. 6 is a block diagram illustrating a configuration of the mobile telephone terminal of the communication charge calculation system in an embodiment 3 of the present invention.
[Fig. 7] Fig. 7 is a block diagram illustrating a configuration of the gateway device in the embodiment 3 of the present invention.
[Fig. 8] Fig. 8 is a sequence view illustrating a procedure in the embodiment 3 of the present invention.
[Fig. 9] Fig. 9 is a block diagram illustrating a configuration example of the communication charge calculation system in an embodiment 4 of the present invention.
[Fig. 10] Fig. 10 is a block diagram illustrating a configuration of the information server in the embodiment 4 of the present invention.
[Fig. 11] Fig. 11 is a view illustrating a content of a communication rate calculation equation storage region of the information server in the embodiment 4 of the present invention.
[Fig. 12] Fig. 12 is a sequence view illustrating a procedure in the embodiment 4 of the present invention.

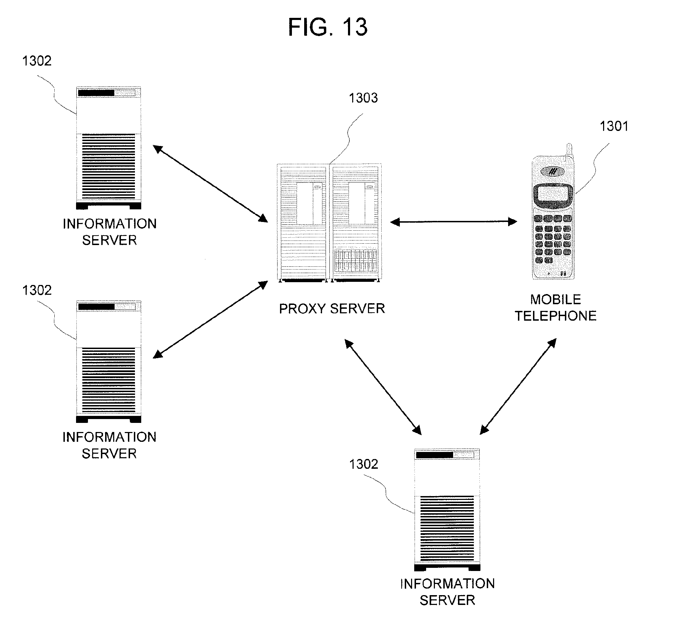

[Fig. 13] Fig. 13 is a configuration view of the conventional art.

### [DESCRIPTION OF NUMERALS]

101 mobile telephone network
102 gateway device
103 mobile telephone terminal
104 information server

### [BEST MODE FOR CARRYING OUT THE INVENTION]

The present invention employs not information of data transmitted to the gateway device 102 by the information server 104, but information of data transmitted to the mobile telephone device 103 from the gateway device 102, which becomes an object of the actual charging by the mobile telephone enterpriser, as incoming data information to be transmitted to the mobile telephone terminal 103 from the information server 104, which becomes a source of the communication rate calculation.

For this, the mobile telephone terminal 103 notifies to the information server the information on the incoming data received from the gateway device 102. The information server 104 calculates the communication rate in the mobile telephone network 101 by means of the communication rate calculation equation for calculating the communication rate in the mobile telephone network 101, from the quantity of outgoing data received from the mobile telephone terminal 103 through the gateway device 102, the information on the incoming data that is notified from the mobile telephone terminal 103, and the quantity of the data for communications with the mobile telephone terminal 103, thereby to calculate the use charge.

Hereinafter, a specific example will be explained.

### [Embodiment 1]

The communication charge calculation system for the mobile telephone communications in accordance with an embodiment 1 of the present invention will be explained by making a reference to the accompanied drawings.

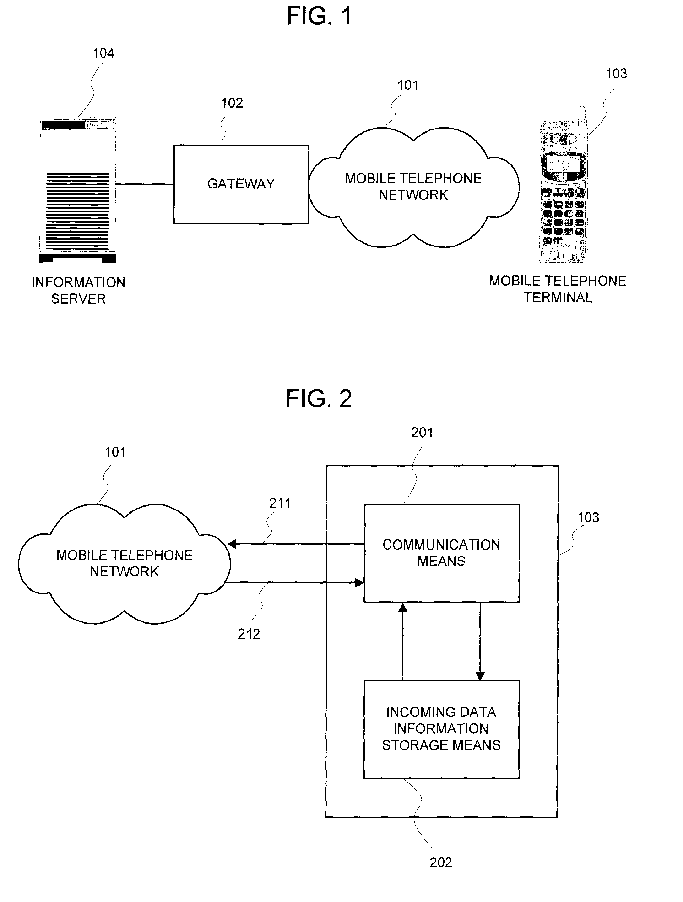

Fig. 1 illustrates a configuration example of the communication charge calculation system in the embodiment 1 of the present invention.

The communication charge calculation system of the present invention is configured of the mobile telephone network 101, the gateway device 102, the mobile telephone terminal 103, and the information server 104. In fig. 1, it is assumed that the number of the mobile telephone terminal 103 is one (1) for simplifying an explanation; however a plurality of the mobile telephone terminals may exist.

The mobile telephone terminal 103, which is connected with the mobile telephone network 101, makes communications with the information server 104 through the gateway device 102 connected with mobile telephone network.

Fig. 2 illustrates a configuration of the mobile telephone terminal 103 of the communication charge calculation system in accordance with the embodiment 1 of the present invention.

The mobile telephone terminal 103 is configured of communication means 201 and incoming data information storage means 202.

The communication means 201 has a function of making communications with the information server 104 through the mobile telephone network 101 and the gateway device 102. The mobile telephone terminal 103 has terminal identification information affixed for identifying the other mobile telephone terminal. The communication means 201 transmits a data request 211 having the terminal identification information as an attribute to the information server 104, and acquires data 212 from the information server 104. Herein, there exists the method in which the mobile telephone terminal 103 has a browser function to make a data request by means of a HTTP (Hyper Text Transfer Protocol) as a method of a data request; however the method of a data request is not limited hereto. In a case of making encrypted communications with the information server 104, the communication means 201 carries out an encryption/decoding. Further, the communication means 201 has a function of, in a case of having successfully acquired the incoming data 212 from the information server 104, storing an information identifier accompanying the data in incoming data information storage means 202. Further, the communication means 201 has a function of reading the information identifier stored in the incoming data information storage means 202 to notify it to the information server 104 as incoming data information. Herein, as a method of notifying the incoming data information to the information server 104, there exists the method of notifying it simultaneously with the data request; however the method is not limited hereto.

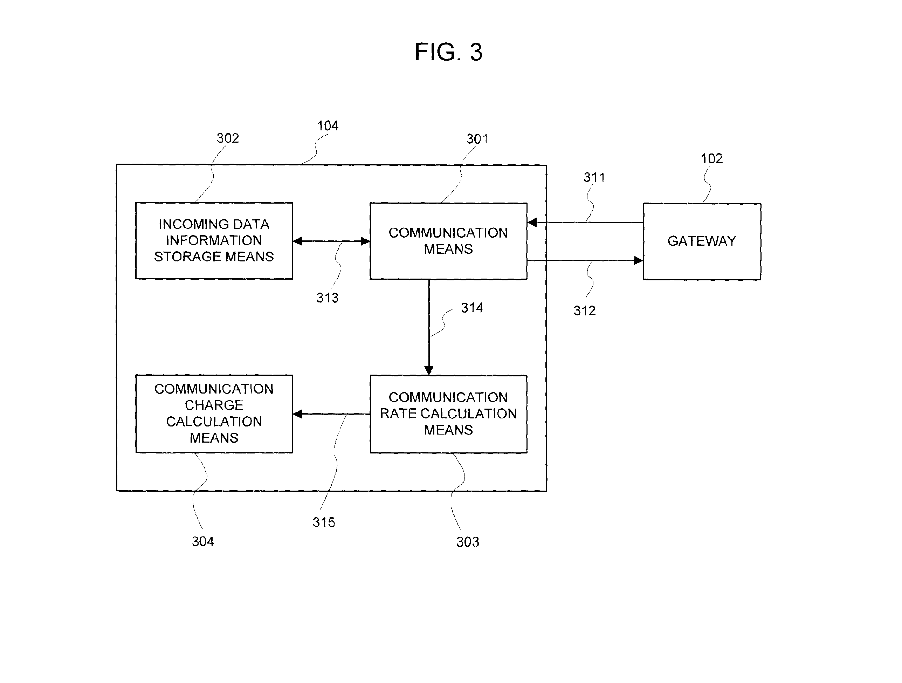

Fig. 3 illustrates a configuration of the information server 104 of the communication charge calculation system in accordance with the embodiment 1 of the present invention.

The information server 104 is configured of communication means 301, incoming data information storage means 302, and communication rate calculation means 303, and communication charge calculation means 304.

The communication means 301 makes communications with the mobile telephone terminal 103 through the gateway 102, and provides data 312 in response to a data request 311 by the mobile telephone terminal 103. In a case of making encrypted communications with the mobile telephone terminal 103, the communication means 301 carries out an encryption/decoding. The data request 311 has terminal identification information affixed for identifying the mobile telephone terminal 103. There exists also the case that the mobile telephone terminal 103 notifies the incoming data information simultaneously with the data request 311. In a case where the communication means 301 transmits the data 312 to the mobile telephone terminal 103, it affixes an information identifier for uniquely identifying data hereto, and stores this information identifier and size of the data in the incoming data information storage means 302. Further, when the communication means 301 receives the data request 311, it acquires size of the data (outgoing data) transmitted from the mobile telephone, and delivers it to the communication rate calculation means 303 together with the terminal identification information. Further, when the communication means 301 accepts a notification of the incoming data information from the mobile telephone terminal 103, it confirms whether the information identifier that is included in the notified incoming data information coincides with the information identifier stored in the incoming data information storage means 302, and in a case it has coincided, it delivers the data size and terminal identification information stored in the incoming data information storage means 302 to the communication rate calculation means 303, and clears the incoming data information storage means 302 of the storage.

When the data size and the terminal identification information are delivered by the communication means 301 to the communication rate calculation means 303, the latter calculates a to-be-charged communication rate 314 between the gateway device 102 and the mobile telephone terminal 103 from its data size, and delivers it to the communication charge calculation means 304 together with the terminal identification information. Herein, as a method of calculating the to-be-charged communication rate, the method is thinkable of adding the quantity of data that is exchanged in order that the gateway device 102 and the mobile telephone terminal 103 establish a communication path in some cases, adding the overhead due to a split in a case where data is split and transmitted in some cases, adding the quantity of data necessary for the encryption and the decoding in a case where the encrypted communications are made in some cases, or the like; however the method is not limited hereto.

The communication charge calculation means 304 has a calculation equation for, for the mobile telephone terminal 103, obtaining the communication charge from the to-be-charged communication rate. The to-be-charged communication rate and the terminal identification information are delivered by the communication rate calculation means 303 to the communication charge calculation means 304, which calculates the communication charge from the calculation equation decided terminal by terminal.

A communication charge calculation operation in the communication charge calculation system in accordance with the first embodiment of the present invention will be explained by making a reference to Fig. 1, Fig. 2, Fig. 3, and Fig. 4 in all.

It is assumed that a notification of the incoming data information from the mobile telephone terminal 103 is made simultaneously with requesting data of the information server 104.

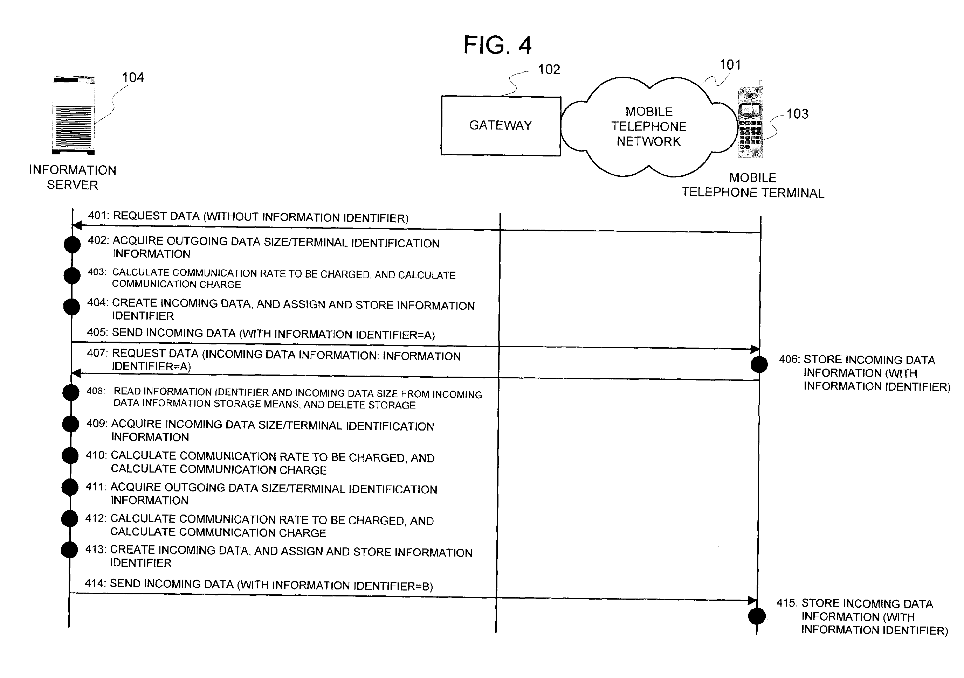

Fig. 4 illustrates a procedure from the data request by the mobile telephone terminal 103 to the calculation of the communication charge in the communication charge calculation system in accordance with the first embodiment of the present invention.

The mobile telephone terminal 103 requests data of the information server 104 (step 401).

When the information server 104 receives the data request, the communication means 301 acquires the outgoing data size, or acquires the terminal identification information that is included in the data request, and delivers these to the communication rate calculation means 303 (step 402).

The communication rate calculation means 303 calculates the to-be-charged communication rate from the size of the outgoing data, and delivers it to the communication charge calculation means 304 together with the terminal identification information, and the communication charge calculation means 304 calculates the communication charge from the to-be-charged communication rate by using the calculation equation that is specified by the terminal identification information (step 403).

The information server 104 creates data requested from the mobile telephone terminal 103, creates an information identifier, and stores size of the created data and the created information identifier in the incoming data information storage means 302 (step 404).

The information server 104 transmits the incoming data that goes to the mobile telephone terminal 103, and at this time, causes the information identifier to accompany it (step 405).

When the mobile telephone terminal 103 successfully receives the incoming data, it stores the information identifier accompanying the data in the incoming data information storage means 202 (step 406).

At the moment that the mobile telephone terminal 103 makes a data request, it notifies the information identifier stored in the incoming data information storage means 202 as the incoming data information together therewith (step 407).

In a case where the incoming data information is included in the data request, the information server 104 reads the stored information identifier and data size from the incoming data information storage means 302, and in a case where the read information identifier has coincided with the information identifier that is included in the notified incoming data information, it clears the incoming data information storage means 302 (step 408).

The information server 104 delivers the data size acquired in the step 408, and the terminal identification information, which is included in the data request, to the communication rate calculation means 303 (step 409).

The communication rate calculation means 303 calculates the to-be-charged communication rate, delivers it to the communication charge calculation means 304 together with the terminal identification information, and the communication charge calculation means 304 calculates the communication charge from the to-be-charged communication rate by using the calculation equation that is specified by the terminal identification information (step 410).

Operations of step 411 to step 415 are identical to those of the step 402 to the step 406 previously explained, so an explanation thereof is omitted.

Additionally, the configuration is also acceptable in which the procedure of the step 408 to the step 410 is replaced with that of the step 411 and the step 412, and the communication charge of the outgoing data is antecedently calculated. Further, the configuration is also acceptable in which at the time point of having skipped the step 410 to acquire the quantity of the outgoing data, the quantity of the incoming data, and the terminal identification information in the step up to the step 411, these kinds of the information are delivered to the communication rate calculation means 303, the communication rate calculation means 303 calculates the to-be-charged communication rate of each of the quantity of the outgoing data and the quantity of the incoming data to deliver them to the communication charge calculation means 304 together with the terminal identification information, and the communication charge calculation means 304 calculates the communication charge from the to-be-charged communication rate by using the calculation equation that is specified by the terminal identification information.

### [Embodiment 2]

The communication charge calculation system for the mobile telephone communications in accordance with the embodiment 2 of the present invention will be explained by making a reference to the accompanied drawings.

A system configuration of the communication charge calculation system in accordance with the embodiment 2 of the present invention is similar to that of the embodiment 1 shown in Fig. 1, so an identical number is affixed to the similar component, and the detailed explanation is omitted.

A configuration of the mobile telephone terminal 103 of the communication charge calculation system in accordance with the embodiment 2 of the present invention is identical to that of the mobile telephone terminal of the communication charge calculation system in accordance with the embodiment 1 shown in Fig. 2; however the mobile telephone terminal of the embodiment 2 differs from the mobile telephone terminal in accordance with the embodiment 1 in the information that is stored in the incoming data information storage means 202.

In a case where the communication means 201 of the mobile telephone terminal 103 in the communication charge calculation system of the embodiment 2 has acquired the incoming data 211 from the information server 104, it stores the information identifier accompanying the data and the received quantity of data in the incoming data information storage means 202. Herein, it is assumed that also in a case where the incoming data has not been received completely due to deterioration in a communication situation of the mobile telephone network, the quantity of the data received up to the halfway is stored in the incoming data information storage means 202.

The communication means 201 has a function of reading the information identifier and the received quantity of data stored in the incoming data information storage means 202 to notify these kinds of the incoming data information to the information server 104.

A configuration of the information server 104 of the communication charge calculation system in accordance with the embodiment 2 of the present invention is identical to that of the information server of the communication charge calculation system in accordance with the embodiment 1 shown in Fig. 3; however the information server of the embodiment 2 differs from the information server in accordance with the embodiment 1 in the information that is stored in the incoming data information storage means 302, and it stores only the information identifier accompanying the incoming data.

Further, an operation of the communication means of the information server 104 in the communication charge calculation system in accordance with the embodiment 2 of the present invention is identical to that of the communication means of the information server 104 in accordance with the embodiment 1 except an operation in the case that the incoming data information has been notified from the mobile telephone terminal. When the communication means of the information server 104 in the communication charge calculation system in accordance with the embodiment 2 is notified of the incoming data information by the mobile telephone terminal, it confirms whether the information identifier that is included in the notified incoming data information coincides with the information identifier stored in the incoming data information storage means 302, and in a case where it has coincided, it delivers to the communication rate calculation means 303 the incoming data size that is included in the notified incoming data information and the terminal identification information, and clears the incoming data information storage means 302 of the storage.

Communication rate calculation means and communication charge calculation means of the communication charge calculation system in accordance with the embodiment 2 of the present invention is identical to those of the communication charge calculation system in accordance with the embodiment 1, respectively, so an explanation is omitted herein.

A communication charge calculation operation in the communication charge calculation system in accordance with the embodiment 2 of the present invention will be explained by making a reference to Fig. 1, Fig. 2, Fig. 3, and Fig. 5 in all.

It is assumed that a notification of the information identifier from the mobile telephone terminal 103 is made simultaneously with requesting data of the information server 104.

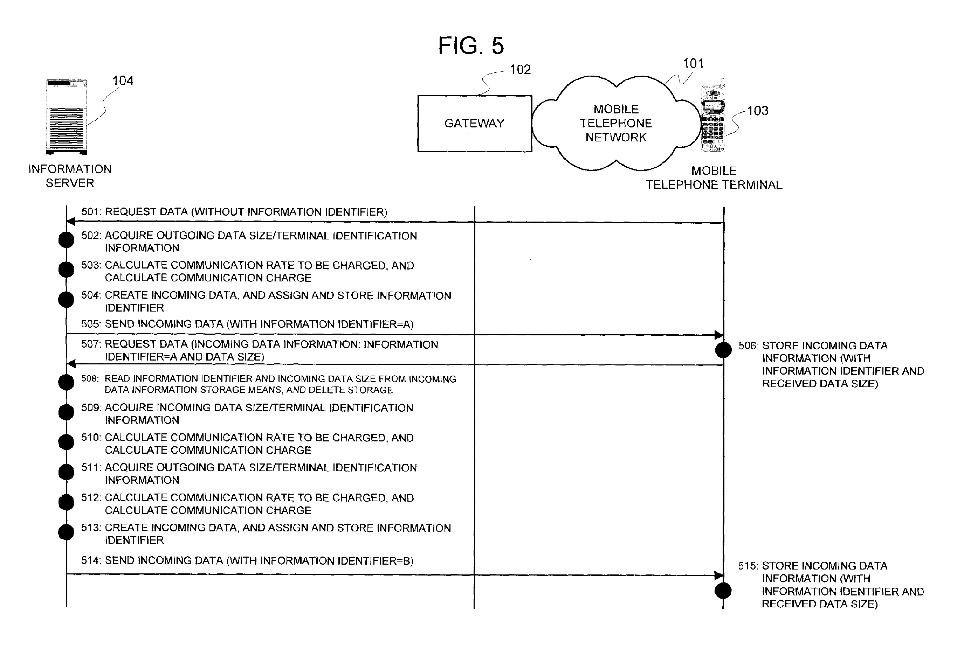

Fig. 5 illustrates a procedure from the data request by the mobile telephone terminal 103 to the calculation of the communication charge in the communication charge calculation system in accordance with the embodiment 2 of the present invention. Processes of steps 501 to 503, step 505, steps 510 to 512, and step 514 in Fig. 5 are identical to those of the steps 401 to 403, the step 405, the steps 410 to 412, and the step 414 of the embodiment 1 of the present invention explained in Fig. 4, so an explanation thereof is omitted herein. Further, a process of a step 513 is identical to that of a step 504 to be explained hereinafter.

The information server 104 creates data requested by the mobile telephone terminal 103, creates an information identifier, and stores only the information identifier in the incoming data information storage means (step 504).

When the mobile telephone terminal receives the incoming data, it stores the information identifier accompanying the data, and size of the received data in the incoming data information storage means 202 (step 506). Herein, it is assumed that also in a case where the incoming data has not received completely due to deterioration in a communication situation of the mobile telephone network, the quantity of the data received up to the halfway is stored in the incoming data information storage means 202.

At the moment that the mobile telephone terminal makes a data request, it notifies the information identifier and data size stored in the incoming data information storage means as the incoming data information (step 507).

In a case where the incoming data information is included in the data request, the information server reads the information identifier stored in the incoming data information storage means, and in a case where the read information identifier has coincided with the information identifier that is included in the notified incoming data information, it clears the incoming data information storage means. In a step 509, the information server delivers the incoming data size that is included in the incoming data information notified in the step 508, and the terminal identification information that is included in the data request to the communication rate calculation means (step 508).

Additionally, the configuration is also acceptable in which the procedure of the step 508 and the step 509 is replaced with that of the step 511 and the step 512, and the communication charge of the outgoing data is antecedently calculated. Further, the configuration is also acceptable in which at the time point of having skipped the step 510 to acquire the quantity of the outgoing data, the quantity of the incoming data, and the terminal identification information in the step up to the step 511, these kinds of the information are delivered to the communication rate calculation means, the communication rate calculation means calculates the to-be-charged communication rate of each of the quantity of the outgoing data and the quantity of the incoming data to deliver them to the communication charge calculation means together with the terminal identification information, and the communication charge calculation means calculates the communication charge from the to-be-charged communication rate by using the calculation equation that is specified by the terminal identification information.

### [Embodiment 3]

The communication charge calculation system for the mobile telephone communications in accordance with the embodiment 3 of the present invention will be explained by making a reference to the accompanied drawings.

A system configuration of the communication charge calculation system in accordance with the embodiment 3 of the present invention is similar to that of the embodiment 1 shown in Fig. 1, so an identical number is affixed to the similar component, and the detailed explanation is omitted.

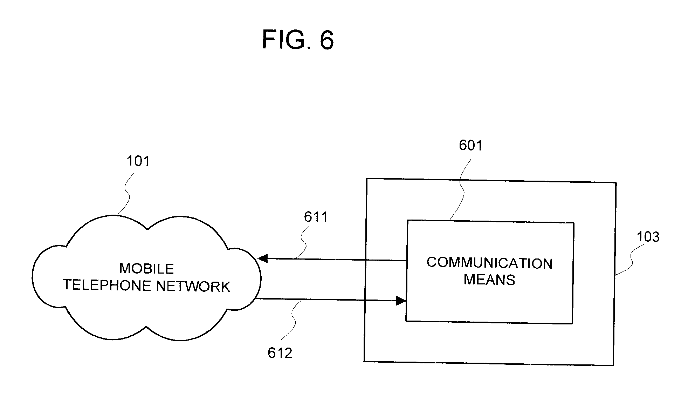

Fig. 6 illustrates a configuration of the mobile telephone terminal 103 of the communication charge calculation system in the embodiment 3 of the present invention, and the mobile telephone terminal 103 is configured of only communication means 601. The communication means 601, which has a function of making communications with the information server 104 through the mobile telephone network 101 and the gateway device 102, transmits a data request 611 having the terminal identification information as an attribute to the information server 104, and acquires data 612 from the information server 104.

A configuration and an operation of the information server 104 of the communication charge calculation system in accordance with the embodiment 3 of the present invention are identical to those of the information server of the communication charge calculation system in accordance with the foregoing embodiment 1, respectively, so an identical number is affixed to the similar component and operation, and its explanation is omitted herein.

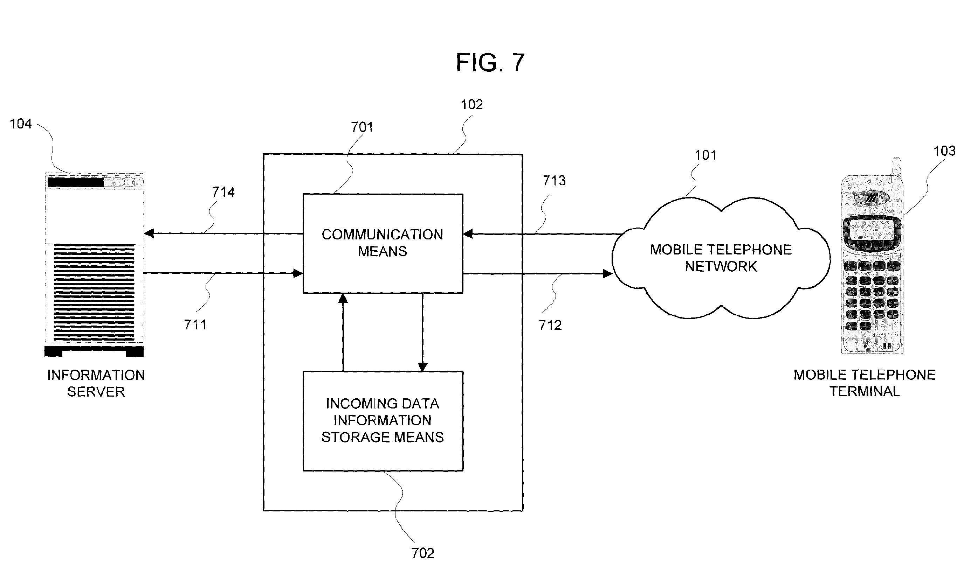

Fig. 7 illustrates a configuration of the gateway device 102 of the communication charge calculation system in accordance with the embodiment 3 of the present invention.

The gateway device 102 is configured of a communication means 701 and incoming data information storage means 702.

The communication means 701 terminates incoming data 711 that goes to the mobile telephone terminal 103 from the information server 104, and transmits it to the mobile telephone terminal 103. At this time, the communication means 701 monitors whether a transfer thereof to the mobile telephone terminal 103 is completed, and only in a case where the transfer has been completed, it stores the information identifier accompanying the incoming data in the incoming data information storage means. Further, the communication means 701 has a function of notifying the information identifier of the incoming data that has been transferred as incoming data information to the information server. As a method of notifying the incoming data information to the information server, there exists, for example, the method of terminating a data request 713, which goes to the information server 104 from the mobile telephone terminal 103, to affix the information identifier stored in the incoming data information storage means hereto, and to send out it to the information server 104; however the method is not limited hereto.

A communication charge calculation operation in the communication charge calculation system in accordance with the embodiment 3 of the present invention will be explained by making a reference to Fig. 1, Fig. 3, Fig. 6, Fig. 7, and Fig. 8 in all.

It is assumed that a notification of the incoming data information, which goes to the information server 104 from the gateway device 102, is made, by affixing it to the data request by the mobile telephone terminal 103.

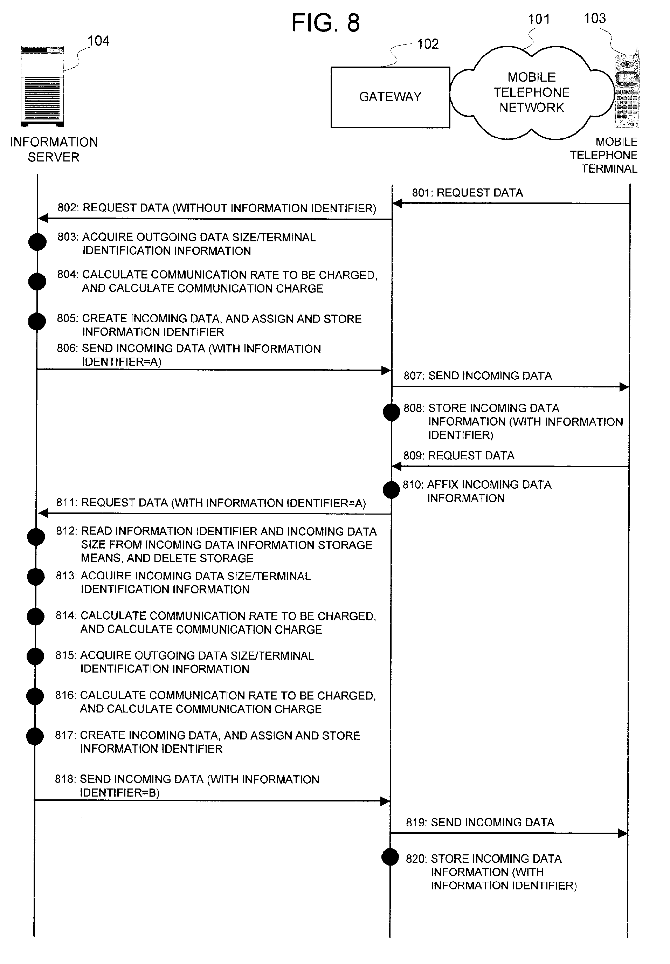

Fig. 8 illustrates a procedure from the data request by the mobile telephone terminal 103 to the calculation of the communication charge in the communication charge calculation system in accordance with the embodiment 3 of the present invention.

Processes of steps 803 to 806, and steps 812 to 817 in Fig. 8 are identical to those of the steps 402 to 405, and the steps 408 to 413 in the procedure from the data request by the mobile telephone terminal to the calculation of the communication charge in the communication charge calculation system in accordance with the foregoing embodiment 1 of the present invention, so its explanation is omitted herein. Further, processes of step 818 to 820 are identical to those of steps 806 to 808 to be explained hereafter.

The data request by the mobile telephone terminal is terminated by the gateway device (step 801), and the gateway device affixes the information identifier stored in the incoming data information storage means 702 to the data request as incoming data information, and sends out it to the information server (step 802). Additionally, herein, there exists no information stored in the incoming data information storage means 702 of the gateway device.

When the information server transmits the incoming data accompanied by the information identifier to the mobile telephone terminal, the gateway device terminates its communication (step 806), and transfers it to the mobile telephone terminal (step 807).

At this time, the gateway device monitors communications with the mobile telephone terminal, and stores the information identifier accompanying the data in the incoming data information storage means at the time of having all transferred the incoming data (step 808).

The data request transmitted from the mobile telephone terminal is terminated by the gateway device (step 809), and the gateway device affixes the information identifier stored in the incoming data information storage means 702 to the data request as incoming data information (step 810), and sends out the data request having the incoming data information affixed to the information server (step 811).

Additionally, the configuration is also acceptable in which the procedure of the step 812 to the step 814 is replaced with that of the step 815 and the step 816, and the communication charge of the outgoing data is antecedently calculated. Further, the configuration is also acceptable in which at the time point of having skipped the step 814 to acquire the quantity of the outgoing data, the quantity of the incoming data, and the terminal identification information in the step up to the step 814, these kinds of the information are delivered to the communication rate calculation means, the communication rate calculation means calculates the to-be-charged communication rate of each of the quantity of the outgoing data and the quantity of the incoming data to deliver them to the communication charge calculation means together with the terminal identification information, and the communication charge calculation means calculates the communication charge from the to-be-charged communication rate by using the calculation equation that is specified by the terminal identification information.

Further, the configuration is also acceptable in which it is not that the information server stores only the information identifier that is affixed to the incoming data in the step 805, and the gateway device stores the information identifier accompanying the data at the time of having all transferred the incoming data to the mobile telephone terminal, similarly to the incoming data information of the communication charge calculation system in the embodiment 2, but that the gateway device stores the quantity of the data and the information identifier that were possible to transfer to the mobile telephone terminal in the step 807 (step 808), the incoming data information that is affixed to the data request in the step 810 is the information identifier and the quantity of data that are stored, and the information server uses the quantity of data included in the incoming data information, which is notified in the step 811, as incoming data information in step 813.

### [Embodiment 4]

The communication charge calculation system for the mobile telephone communications in accordance with the embodiment 4 of the present invention will be explained by making a reference to the accompanied drawings.

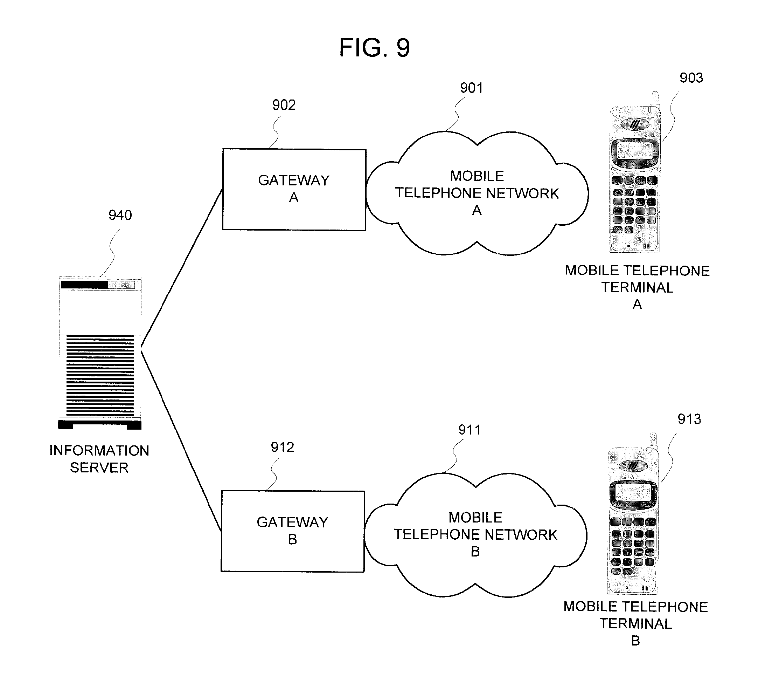

Fig. 9 illustrates a configuration example of the communication charge calculation system in accordance with the embodiment 4 of the present invention.

The communication charge calculation system in accordance with the embodiment 4 of the present invention is configured of mobile telephone networks 901 and 911, gateway devices 902 and 912, mobile telephone terminals 903 and 913, and an information server 930. The gateway devices 902 and 912 are installed into the mobile telephone networks 901 and 911, respectively. Further, the mobile telephone terminals 903 and 913 make a connection with the mobile telephone networks 901 and 911, respectively, and make communications with the information server through the gateway devices 902 and 912, respectively. Additionally, in Fig. 9, it is assumed that the number of the mobile telephone network is two for simplifying an explanation; however the number of the mobile telephone network may be arbitrary, and the gateway devices are installed into them, respectively. Further, in Fig. 9, it is assumed that the number of the mobile telephone terminal that makes a connection to one mobile telephone network is one (1) for simplifying an explanation; however a plurality of the mobile telephone terminals may exist.

A configuration of the mobile telephone terminal 903 of the communication charge calculation system in accordance with the embodiment 4 of the present invention is identical that of the mobile telephone terminal 103 of the communication charge calculation system in the first embodiment explained in Fig. 2. The communication means of the mobile telephone terminal 903 differs from the communication means 201 of the mobile telephone terminal 103 in the communication charge calculation system in the embodiment 1 only in a point of, in requesting data of the information server, causing network identification information for identifying the mobile telephone network to accompany the data request in addition to the terminal identification information. For example, there exists the method of requesting data by means of the HTTP to describe the network identification information in its header information; however the method of causing the network identification information to accompany the data request is not limited hereto. Information that is stored in the incoming data information storage means of the mobile telephone terminal 903 is identical to the information that is stored in the incoming data information storage means 202 of the mobile telephone terminal 103 in the communication charge calculation system of the first embodiment.

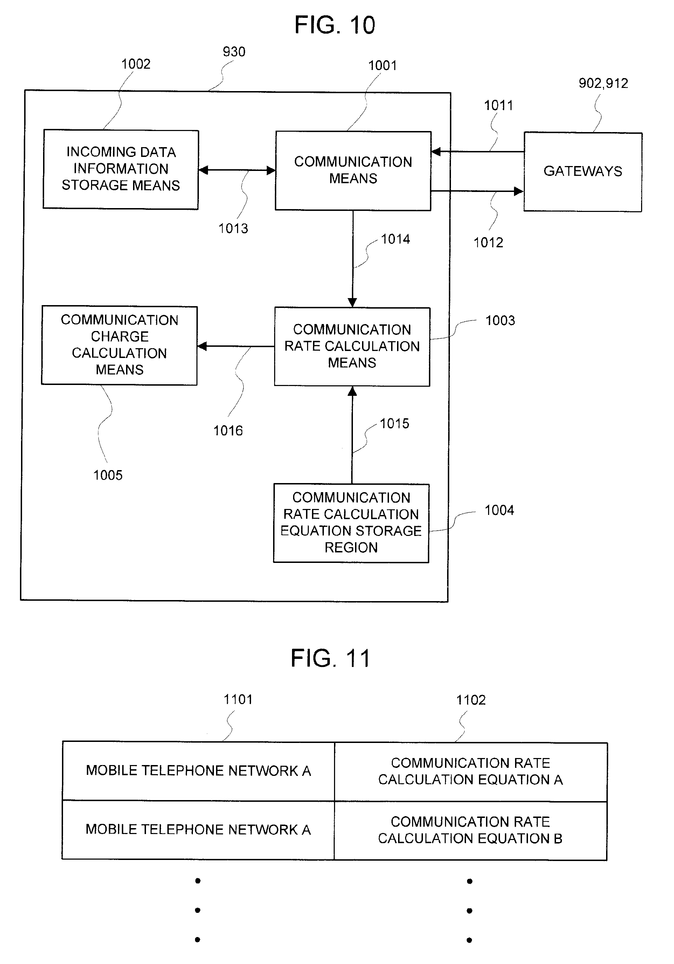

Fig. 10 illustrates a configuration of the information server 930 of the communication charge calculation system in accordance with the embodiment 4 of the present invention. The information server 930 is configured of communication means 1001, incoming data information storage means 1002, communication rate calculation means 1003, communication rate calculation equation storage region 1004, and communication charge calculation means 1005.

The communication means 1001 of the information server 930 makes communications with the mobile telephone terminals 903 and 913 through the gateways 902 and 912, respectively, and provides data 1012 in response to a data request 1011 by the mobile telephone terminals 903 and 913. The data request 1011 has the terminal identification information for identifying the mobile telephone terminal, and the network identification information for identifying the mobile telephone network, with which the mobile telephone terminal makes a connection, affixed. In a case where the communication means 1001 transmits the data 1012 to the mobile telephone terminal, it affixes an information identifier for uniquely identifying data, and stores this information identifier and size of data in the incoming data information storage means 1002. Further, when the communication means 1001 receives the data request 1011, it acquires size of data (outgoing data) sent from the mobile telephone terminal, and delivers it to the communication rate calculation means 1003 together with the terminal identification information and the network identification information. Further, when the communication means 1001 accepts a notification of the incoming data information from the mobile telephone terminal, it confirms whether the information identifier that is included in the notified incoming data information coincides with the information identifier stored in the incoming data information storage means 1002, and in a case it has coincided, it delivers the data size, terminal identification information, and network identification information stored in the incoming data information storage means 1002 to the communication rate calculation means 1003, and clears the incoming data information storage means 1002 of the storage.

Fig. 11 illustrates a content of the communication rate calculation equation storage region 1004 in the information server 930 of the communication charge calculation system in accordance with the embodiment 4 of the present invention. A calculation rate calculation equation 1102 for, for each of the mobile telephone networks 1101 in which the information server 930 makes communications, calculating the to-be-charged communication rate between the mobile telephone terminal and the gateway device from size of the data, which the information server 930 transmits/receives to/from the gateway device, is caused to correspond to the communication rate calculation equation storage region 1004. As a method of calculating the to-be-charged communication rate, the method is thinkable of adding the quantity of data that is exchanged in order that the gateway device and the mobile telephone terminal establish a communication path in some cases, adding an overhead due to a split in the case that data is split and transmitted in some cases, adding the quantity of data necessary for the encryption and the decoding in the case that encrypted communications are made in some cases, or the like; however the method is not limited hereto.

When the data size, the terminal identification information, and the network identification information are delivered by the communication means 1001 to the communication rate calculation means 1003 of the information server 930, the latter reads a communication rate calculation equation 1015, which corresponds to the mobile telephone network that is specified by the network identification information, from the communication rate calculation equation storage region 1004, calculates the to-be-charged communication rate from the data size by using the communication rate calculation equation 1015, and delivers the calculated to-be-charged communication rate to the communication charge calculation means 1005 together with the terminal identification information.

The communication charge calculation means 1005 has a calculation equation for, for the mobile telephone terminal, obtaining the communication charge from the to-be-charged communication rate, and the to-be-charged communication rate and the terminal identification information are delivered by the communication rate calculation means 1003 to the communication charge calculation means 1005, which calculates the communication charge from the calculation equation decided terminal by terminal.
A communication charge calculation operation in the communication charge calculation system in accordance with the embodiment 4 of the present invention will be explained by making a reference to Fig. 2, Fig. 9, Fig. 10, Fig. 11, and Fig. 12 in all. It is assumed that a notification of the incoming data information from the mobile telephone terminal is made simultaneously with requesting data of the information server 930.

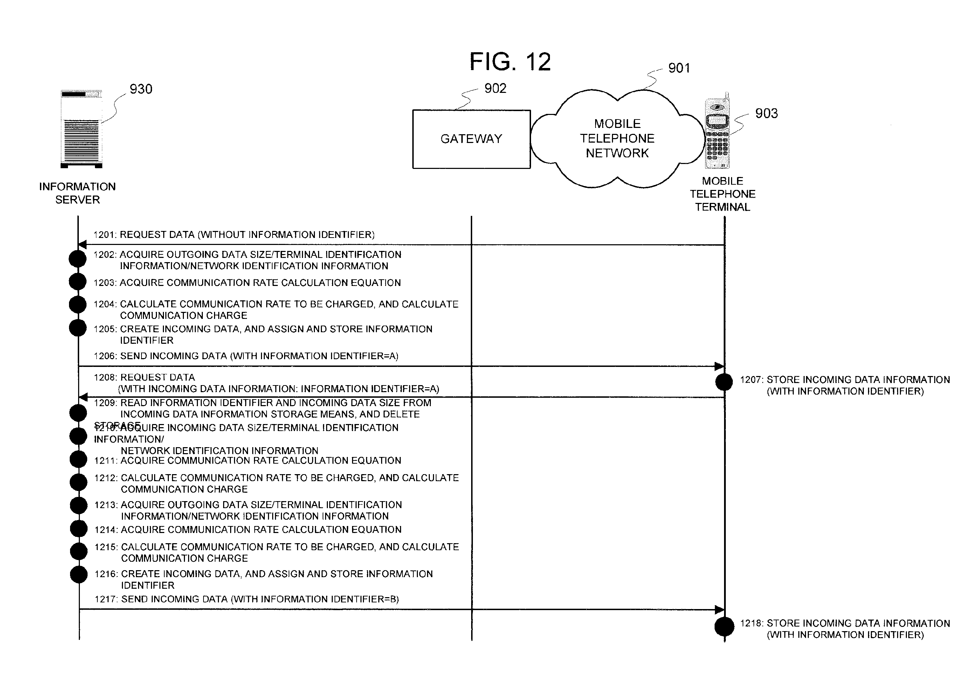

Fig. 12 illustrates a procedure from the data request by the mobile telephone terminal 903 to the calculation of the communication charge in the communication charge calculation system in accordance with the embodiment 4 of the present invention. Additionally, a procedure from the data request by the mobile telephone terminal 913 to the calculation of the communication charge is also identical.

The mobile telephone terminal 903 requests data of the information server 930 (step 1201).

When the information server 930 receives the data request, the communication means 1001 acquires the outgoing data size, further acquires the terminal identification information and the network identification information that are included in the data request, and delivers these to the communication rate calculation means 1003 (step 1202).

The communication rate calculation means 1003 reads the communication rate calculation equation, which corresponds to the mobile telephone network 901 that is identified by the network identification information, from the communication rate calculation equation storage region 1004 (step 1203), calculates the to-be-charged communication rate from size of the outgoing data by means of the communication rate calculation equation, delivers it to the communication charge calculation means 1005 together with the terminal identification information, and the communication charge calculation means 1005 calculates the communication charge from the to-be-charged communication rate, by using the calculation equation that is specified by the terminal identification information (step 1204).

The information server 930 creates data requested by the mobile telephone terminal 903, creates an information identifier, and stores size of the created data and the created information identifier in the incoming data information storage means 1002 (step 1205).

The information server 930 transmits the incoming data that goes to the mobile telephone terminal 903, and at this time, causes the information identifier to accompany it (step 1206).

When the mobile telephone terminal 903 successfully receives the incoming data, it stores the information identifier accompanying the data in the incoming data information storage means (step 1207).

At the moment that the mobile telephone terminal 903 makes a data request, it notifies the information identifier stored in the incoming data information storage means as the incoming data information together therewith (step 1208).

In a case where the incoming data information is included in the data request, the information server 930 reads the stored information identifier and data size from the incoming data information storage means 1002, and in a case where the read information identifier has coincided with the information identifier that is included in the notified incoming data information, it clears the incoming data information storage means 1002 of the storage (step 1209).

The information server 930 delivers the data size acquired in the step 1209, and the terminal identification information and the network identification information that are included in the data request to the communication rate calculation means 1003 (step 1210).

The communication rate calculation means 1003 reads the communication rate calculation equation that corresponds to the mobile telephone network 901 that is identified by the network identification information from the communication rate calculation equation storage region 1004 (step 1211), calculates the to-be-charged communication rate from the data size by means of the communication rate calculation equation, and delivers it to the communication charge calculation means 1005 together with the terminal identification information, and the communication charge calculation means 1005 calculates the communication charge from the to-be-charged communication rate by using the calculation equation that is specified by the terminal identification information (step 1212).

Operations from step 1213 to step 1218 are identical to those of the step 1202 to 1207 explained previously, so its explanation is omitted.

Additionally, the configuration is also acceptable in which the procedure of the step 1209 to the step 1212 is replaced with that of the step 1213 to the step 1215, and the communication charge of the outgoing data is antecedently calculated. Further, the configuration is also acceptable in which at the time point of having skipped the step 1211 and the step 1212 to acquire the quantity of the outgoing data, the quantity of the incoming data, and the terminal identification information in the step up to the step 1213, these kinds of the information are delivered to the communication rate calculation means 1003, the communication rate calculation means 1003 calculates the to-be-charged communication rate of each of the quantity of the outgoing data and the quantity of the incoming data to deliver them to the communication charge calculation means 1004 together with the terminal identification information, and the communication charge calculation means 1004 calculates the communication charge from the to-be-charged communication rate by using the calculation equation that is specified by the terminal identification information.

Further, the configuration is also acceptable in which it is not that the information server 930 stores only the information identifier that is affixed to the incoming data in the step 1205, and the mobile telephone terminal 903 stores only the information identifier of the data that has been successfully received, similarly to the incoming data information of the communication charge calculation system in the embodiment 2, but that the mobile telephone terminal 903 stores the information identifier of the data that was possible to acquire in the step 1207, and the acquired quantity of data also in a case of having not succeeded in the reception, the incoming data information that is affixed to the data request in the step 1208 is the information identifier and the quantity of data that are stored, and the information server uses the quantity of data included in the incoming data information in the step 1210, which is notified in the step 1208, as the incoming data information.

Further, the configuration is also acceptable in which it is not that the mobile telephone terminal 903 stores the incoming data information to notify it to the information server 930, similarly to the incoming data information of the communication charge calculation system in the embodiment 3, but that the gateway device 902 stores the incoming data information in transferring the incoming data to the mobile telephone terminal 903, and the gateway device 902 notifies the incoming data information to the information server 930.

Additionally, in the foregoing embodiment 1 to embodiment 3, the information server, the mobile telephone terminal, and the gateway can be configured by means of hardware; however each section also can be realized by means of a computer program.

### [SUSCEPTIBLE OF INDUSTRIAL APPLICATION]

As an example of putting the present invention into practical use, the information system such that the information service that has been provided for aiming for a personal computer within the enterprise is provided for the mobile terminal can be sited. In a case where the mobile telephone having a personal contract utilizes the enterprise's service, and the enterprise bears the cost necessary for its communication, the present invention enables the communication charge to be calculated in an enterprise server with a small error as against the charging by the mobile telephone enterpriser.

## Claims

1. A communication charge calculation system for mobile telephone communications that is configured of a mobile telephone network, a mobile telephone terminal making a connection with said mobile telephone network, a gateway device that is installed into said mobile telephone network, and an information server, in which said mobile telephone terminal makes communications with said information server through said gateway device, and said information server calculates a use charge of the mobile telephone network necessary for communications between said information server and said mobile telephone terminal, **characterized in that**:
said mobile telephone terminal notifies information on incoming data received from said gateway device to said information server;
said information server:
has a communication rate calculation equation for calculating a communication rate in said mobile telephone network from a quantity of incoming data for communications with said mobile telephone terminal; and
calculates the communication rate in said mobile telephone network by means of said communication rate calculation equation, from a quantity of outgoing data received from said mobile telephone terminal through said gateway device, and the information on the incoming data that is notified from said mobile telephone terminal, thereby to calculate the use charge.

2. A communication charge calculation system for mobile telephone communications that is configured of a mobile telephone network, a mobile telephone terminal making a connection with said mobile telephone network, a gateway device that is installed into said mobile telephone network, and an information server, in which said information server and said mobile telephone terminal make communications with each other through said gateway device, and said information server calculates a use charge of the mobile telephone network necessary for communications between said information server and said mobile telephone terminal, **characterized in that**:
said gateway device notifies information on incoming data transmitted to said mobile telephone terminal from said gateway device to said information server;
said information server:
has a communication rate calculation equation for calculating a communication rate in said mobile telephone network from a quantity of data for communications with said mobile telephone terminal; and
calculates the communication rate in said mobile telephone network by means of said communication rate calculation equation, from a quantity of outgoing data received from said mobile telephone terminal through said gateway device, and said information on said incoming data that is notified from said gateway device, thereby to calculate the use charge.

3. A communication charge calculation system for mobile telephone communications that is configured of two mobile telephone networks or more, a mobile telephone terminal making a connection with each of said mobile telephone networks, a gateway device that is installed into each of said two mobile telephone networks or more, and an information server, in which said mobile telephone terminal makes communications with said information server through said gateway device installed in the mobile telephone network with which the mobile telephone terminal makes a connection, and said information server calculates a use charge of the mobile telephone network necessary for communications between said information server and said mobile telephone terminal, **characterized in that**:
said information server has:
means for, in communications with said mobile telephone terminal, specifying said mobile telephone network with which the mobile telephone terminal makes a connection; and
further, a communication rate calculation equation for, for each of said two mobile telephone networks or more, calculating a communication rate in the mobile telephone network from a quantity of data for communications with said mobile telephone terminal making a connection with the mobile telephone network;
said mobile telephone terminal notifies to said information server information on incoming data received from said gateway device installed into the mobile telephone network with which the mobile telephone terminal makes a connection; and
said information server calculates the communication rate in said mobile telephone network by means of said communication rate calculation equation that corresponds to said mobile telephone network with which the mobile telephone terminal makes a connection, from a quantity of outgoing data received from said mobile telephone terminal through said gateway device, and said information on said incoming data, thereby to calculate the use charge.

4. A communication charge calculation system for mobile telephone communications that is configured of two mobile telephone networks or more, a mobile telephone terminal making a connection with each of said mobile telephone networks, a gateway device that is installed into each of said two mobile telephone networks or more, and an information server, in which said mobile telephone terminal makes communications with said information server through said gateway device installed in the mobile telephone network with which the mobile telephone terminal makes a connection, and said information server calculates a use charge of the mobile telephone network necessary for communications between said information server and said mobile telephone terminal, **characterized in that**:
said information server has:
means for, in communications with said mobile telephone terminal, specifying said mobile telephone network with which the mobile telephone terminal makes a connection; and
further, a communication rate calculation equation for, for each of said two mobile telephone networks or more, calculating a communication rate in the mobile telephone network from a quantity of data for communications with said mobile telephone terminal making a connection with the mobile telephone network;
said gateway device notifies to said information server information on incoming data transmitted to said mobile telephone terminal making a connection with said mobile telephone network having the gateway device installed; and
said information server calculates the communication rate in the mobile telephone network by means of said communication rate calculation equation that corresponds to said mobile telephone network with which the mobile telephone terminal makes a connection, from a quantity of outgoing data received from said mobile telephone terminal through said gateway device, and said information on said incoming data, thereby to calculate the use charge.

5. The communication charge calculation system for mobile telephone communications according to one of claim 1 to claim 4, **characterized in that**:
the incoming data that is transmitted from said information server to said mobile telephone terminal is accompanied by an information identifier for identifying the incoming data, and said information on said incoming data is said information identifier accompanying said incoming data that said mobile telephone terminal has successfully received last;
in a case of having transmitted the incoming data to said mobile telephone terminal, said information server stores said information identifier accompanying the incoming data, and size of the data; and
in a case of having received said information on said incoming data from said mobile telephone terminal, said information server calculates the communication rate in said mobile telephone network by the said communication rate calculation equation, from said stored size of said data, and deletes said information identifier from the storage in a case where the information identifier has coincided with said stored information identifier.

6. The communication charge calculation system for mobile telephone communications according to one of claim 1 to claim 4, **characterized in that**:
the incoming data that is transmitted from said information server to said mobile telephone terminal is accompanied by an information identifier for identifying the incoming data, and said information on said incoming data is said information identifier accompanying the incoming data that said mobile telephone terminal has received last, and the received quantity of the incoming data;
in a case of having transmitted the incoming data to said mobile telephone terminal, said information server stores said information identifier accompanying the incoming data; and
in a case of having received said information on said incoming data from said mobile telephone terminal, said information server calculates the communication rate in said mobile telephone network by means of said communication rate calculation equation, from the amount of the data, and deletes said information identifier from the storage in a case where the information identifier has coincided with said stored information identifier.

7. A communication charge calculation system for mobile telephone communications that is configured of a mobile telephone network, a mobile telephone terminal making a connection with said mobile telephone network, a gateway device that is installed into said mobile telephone network, and an information server, in which said mobile telephone terminal makes communications with said information server through said gateway device, and said information server calculates a use charge of the mobile telephone network necessary for communications between said information server and said mobile telephone terminal, **characterized in that**:
said mobile telephone terminal includes the means for: at the time of transmitting data, transmitting a terminal identifier for identifying its own terminal; and
transmitting information on incoming data received from said gateway device to said information server; and
said information server has means for calculating a communication rate in said mobile telephone network based upon a communication rate calculation equation for calculating the communication rate of the mobile telephone terminal, which is specified by said terminal identifier, in said mobile telephone network, a quantity of outgoing data received from said mobile telephone terminal through said gateway device, and a quantity of the incoming data that is obtained from the information on the incoming data that is notified from said mobile telephone terminal, thereby to calculate the use charge for said mobile telephone terminal.

8. A communication charge calculation system for mobile telephone communications that is configured of a mobile telephone network, a mobile telephone terminal making a connection with said mobile telephone network, a gateway device that is installed into said mobile telephone network, and an information server, in which said information server and said mobile telephone terminal make communications with each other through said gateway device, and said information server calculates a use charge of the mobile telephone network necessary for communications between said information server and said mobile telephone terminal, **characterized in that**:
said mobile telephone terminal includes means for, at the time of transmitting data, transmitting a terminal identifier for identifying its own terminal;
said gateway device has means for notifying to said information server information on incoming data transmitted to said mobile telephone terminal from its own device; and
said information server has means for calculating a communication rate in said mobile telephone network based upon a communication rate calculation equation for calculating the communication rate of the mobile telephone terminal, which is specified by said terminal identifier, in said mobile telephone network, a quantity of outgoing data received from said mobile telephone terminal through said gateway device, and a quantity of the incoming data that is obtained from said incoming data that is notified from said gateway device, thereby to calculate the use charge for said mobile telephone terminal.

9. A communication charge calculation system for mobile telephone communications that is configured of two mobile telephone networks or more, a mobile telephone terminal making a connection with each of said mobile telephone networks, a gateway device that is installed into each of said two mobile telephone networks or more, and an information server, in which said mobile telephone terminal makes communications with said information server through said gateway device installed into the mobile telephone network with which the mobile telephone terminal makes a connection, and said information server calculates a use charge of the mobile telephone network necessary for communications between said information server and said mobile telephone terminal, **characterized in that**:
said mobile telephone terminal includes the means for:
at the time of transmitting data, transmitting a terminal identifier for identifying its own terminal; and
notifying to said information server information on incoming data received from said gateway device installed into the mobile telephone network with which the mobile telephone terminal makes a connection; and
said information server has the means for:
in communications with said mobile telephone terminal, specifying said mobile telephone network with which the mobile telephone terminal makes a connection; and
calculating a communication rate in the mobile telephone network based upon a quantity of outgoing data received from said mobile telephone terminal through said gateway device, said information on said incoming data, and a communication rate calculation equation that corresponds to said mobile telephone network with which the mobile telephone terminal that is specified by said terminal identifier makes a connection, thereby to calculate the use charge for said mobile telephone terminal.

10. A communication charge calculation system for mobile telephone communications that is configured of two mobile telephone networks or more, a mobile telephone terminal making a connection with each of said mobile telephone networks, a gateway device that is installed into each of said two mobile telephone networks or more, and an information server, in which said mobile telephone terminal makes communications with said information server through said gateway device installed into the mobile telephone network with which the mobile telephone terminal makes a connection, and said information server calculates a use charge of the mobile telephone network necessary for communications between said information server and said mobile telephone terminal, **characterized in that**:
said mobile telephone terminal includes the means for,
at the time of transmitting data, transmitting a terminal identifier for identifying its own terminal;
said gateway device has means for notifying to said information server information on incoming data transmitted to said mobile telephone terminal making a connection with said mobile telephone network having the gateway device installed; and
said information server has the means for:
in communications with said mobile telephone terminal, specifying said mobile telephone network with which the mobile telephone terminal makes a connection; and
calculating a communication rate in the mobile telephone network based upon a quantity of outgoing data received from said mobile telephone terminal through said gateway device, said information on said incoming data, and a communication rate calculation equation that corresponds to said mobile telephone network with which the mobile telephone terminal that is specified by said terminal identifier makes a connection, thereby to calculate the use charge.

11. The communication charge calculation system for mobile telephone communications according to one of claim 7 to claim 10, **characterized in that**:
the incoming data that is transmitted from said information server to said mobile telephone terminal is accompanied by an information identifier for identifying the incoming data;
said information on said incoming data is said information identifier accompanying said incoming data that said mobile telephone terminal has successfully received last; and
said information server has means for, in a case of having transmitted the incoming data to said mobile telephone terminal, storing said information identifier accompanying the incoming data and size of the data, and for, in a case of having received said information on said incoming data from said mobile telephone terminal, calculating a communication rate in said mobile telephone network by means of said communication rate calculation equation, from said stored size of said data, and deleting said information identifier from the storage in a case where the information identifier has coincided with said stored information identifier.

12. The communication charge calculation system for mobile telephone communications according to one of claim 7 to claim 10, **characterized in that**:
the incoming data that is transmitted from said information server to said mobile telephone terminal is accompanied by an information identifier for identifying the incoming data;
said information on said incoming data is said information identifier accompanying the incoming data that said mobile telephone terminal has received last, and the received quantity of the incoming data; and
said information server has means for, in a case of having transmitted the incoming data to said mobile telephone terminal, storing said information identifier accompanying the data, and for, in a case of having received said information on said incoming data from said mobile telephone terminal, calculating a communication rate in said mobile telephone network by means of said communication rate calculation equation, from the quantity of the data, and deleting said information identifier from the storage in a case where the information identifier has coincided with said stored information identifier.

13. A communication charge calculation method for mobile telephone communications in a communication system that is configured of a mobile telephone network, a mobile telephone terminal making a connection with said mobile telephone network, a gateway device that is installed into said mobile telephone network, and an information server, in which said mobile telephone terminal makes communications with said information server through said gateway device, and said information server calculates a use charge of the mobile telephone network necessary for communications between said information server and said mobile telephone terminal, **characterized in that**:
information on incoming data received from said gateway device is notified to said information server from said mobile telephone terminal; and
a communication rate in said mobile telephone network is calculated by said information server by means of a communication rate calculation equation for calculating the communication rate in said mobile telephone network, from a quantity of outgoing data received from said mobile telephone terminal through said gateway device, the information on the incoming data that is notified from said mobile telephone terminal, and a quantity of data for communications with said mobile telephone terminal, thereby to calculate the use charge.

14. A communication charge calculation method for mobile telephone communications in a communication system that is configured of a mobile telephone network, a mobile telephone terminal making a connection with said mobile telephone network, a gateway device that is installed into said mobile telephone network, and an information server, in which said information server and said mobile telephone terminal make communications with each other through said gateway device, and said information server calculates a use charge of the mobile telephone network necessary for communications between said information server and said mobile telephone terminal, **characterized in that**:
information on incoming data transmitted to said mobile telephone terminal is notified to said information server from said gateway device; and
a communication rate in said mobile telephone network is calculated by said information server by means of a communication rate calculation equation for calculating the communication rate in said mobile telephone network, from a quantity of outgoing data received from said mobile telephone terminal through said gateway device, said information on said incoming data that is notified from said gateway device, and a quantity of data for communications with said mobile telephone terminal, thereby to calculate the use charge.

15. A communication charge calculation method for mobile telephone communications in a communication system that is configured of two mobile telephone networks or more, a mobile telephone terminal making a connection with each of said mobile telephone networks, a gateway device that is installed into each of said two mobile telephone networks or more, and an information server, in which said mobile telephone terminal makes communications with said information server through said gateway device installed into the mobile telephone network with which the mobile telephone terminal makes a connection, and said information server calculates a use charge of the mobile telephone network necessary for communications between said information server and said mobile telephone terminal, **characterized in that**:
in communications with said mobile telephone terminal, said mobile telephone network with which the mobile telephone terminal makes a connection is specified by said information server;
said mobile telephone terminal notifies to said information server information on incoming data received from said gateway device installed into the mobile telephone network with which the mobile telephone terminal makes a connection; and
a communication rate in the mobile telephone network is calculated by said information server by means of a communication rate calculation equation for calculating the communication rate in the mobile telephone network, from a quantity of outgoing data received from said mobile telephone terminal through said gateway device, said information on said incoming data, and a quantity of data for communications with said mobile telephone terminal making a connection with the mobile telephone network for each of said two mobile telephone networks or more, thereby to calculate the use charge.

16. A communication charge calculation method for mobile telephone communications in a communication system that is configured of two mobile telephone networks or more, a mobile telephone terminal making a connection with each of said mobile telephone networks, a gateway device that is installed into each of said two mobile telephone networks or more, and an information server, in which said mobile telephone terminal makes communications with said information server through said gateway device installed into the mobile telephone network with witch the mobile telephone terminal makes a connection, and said information server calculates a use charge of the mobile telephone network necessary for communications between said information server and said mobile telephone terminal, **characterized in that**:
in communications with said mobile telephone terminal, said mobile telephone network with which the mobile telephone terminal makes a connection is specified by said information server;
information on incoming data transmitted to said mobile telephone terminal making a connection with said mobile telephone network having the gateway device installed is notified to said information server from said gateway device; and
said information server calculates a communication rate in the mobile telephone network by means of a communication rate calculation equation for calculating the communication rate in the mobile telephone network, from a quantity of outgoing data received from said mobile telephone terminal through said gateway device, said information on said incoming data, and a quantity of data for communications with said mobile telephone terminal making a connection with the mobile telephone network for each of said two mobile telephone networks or more, thereby to calculate the use charge.

17. The communication charge calculation method for mobile telephone communications according to one of claim 13 to claim 16, **characterized in that**:
the incoming data that is transmitted from said information server to said mobile telephone terminal is accompanied by an information identifier for identifying the incoming data;
said information on said incoming data is said information identifier accompanying said incoming data that said mobile telephone terminal has successfully received last;
in a case of having transmitted the incoming data to said mobile telephone terminal, said information server stores said information identifier accompanying the incoming data, and size of the data; and
in a case of having received said information on said incoming data from said mobile telephone terminal, said information server calculates a communication rate in said mobile telephone network by means of said communication rate calculation equation, from said stored size of said data, and deletes said information identifier from the storage in a case where the information identifier has coincided with said stored information identifier.

18. The communication charge calculation method for mobile telephone communications according to one of claim 13 to claim 16, **characterized in that**:
the incoming data that is transmitted from said information server to said mobile telephone terminal is accompanied by an information identifier for identifying the incoming data;
said information on said incoming data is said information identifier accompanying said incoming data that said mobile telephone terminal has received last, and the received quantity of the incoming data;
in a case of having transmitted the incoming data to said mobile telephone terminal, said information server stores said information identifier accompanying the data; and
in a case of having received said information on said incoming data from said mobile telephone terminal, said information server calculates a communication rate in said mobile telephone network by means of said communication rate calculation equation, from the quantity of the data, and deletes said information identifier from the storage in a case where the information identifier has coincided with said stored information identifier.

19. An information server in a communication system that is configured of a mobile telephone network, a mobile telephone terminal making a connection with said mobile telephone network, a gateway device that is installed into said mobile telephone network, and an information server, in which said mobile telephone terminal makes communications with said information server through said gateway device, and said information server calculates a use charge of the mobile telephone network necessary for communications between said information server and said mobile telephone terminal, **characterized in** having means for calculating a communication rate in said mobile telephone network by means of a communication rate calculation equation for calculating the communication rate in said mobile telephone network based upon a quantity of data for communications with said mobile telephone terminal, from a quantity of outgoing data received from said mobile telephone terminal through said gateway device, and information on incoming data that is notified from said mobile telephone terminal, or said information on said incoming data that is notified from said gateway device, thereby to calculate the use charge.

20. The information server according to claim 19, **characterized in**:
having means for specifying the mobile telephone network with which the mobile telephone terminal makes a connection; and
calculating the use charge by means of the communication rate calculation equation that corresponds to the specified mobile telephone network.

21. The information server according to one of claim 19 and claim 20, **characterized in that**:
the incoming data that is transmitted from said information server to said mobile telephone terminal is accompanied by an information identifier for identifying the incoming data, and said information on said incoming data is said information identifier accompanying said incoming data that said mobile telephone terminal has successfully received last;
in a case of having transmitted the incoming data to said mobile telephone terminal, said information server stores said information identifier accompanying the incoming data, and size of the data; and
in a case of having received said information on said incoming data from said mobile telephone terminal, said information server calculates a communication rate in said mobile telephone network by means of said communication rate calculation equation, from said stored size of said data, and deletes said information identifier from the storage in a case where the information identifier has coincided with said stored information identifier.

22. The information server according to one of claim 19 and claim 20, **characterized in that**:
the incoming data that is transmitted from said information server to said mobile telephone terminal is accompanied by an information identifier for identifying the incoming data, and said information on said incoming data is said information identifier accompanying the incoming data that said mobile telephone terminal has received last, and the received quantity of the incoming data;
in a case of having transmitted the incoming data to said mobile telephone terminal, said information server stores said information identifier accompanying the incoming data; and
in a case of having received said information on said incoming data from said mobile telephone terminal, said information server calculates a communication rate in said mobile telephone network by means of said communication rate calculation equation, from the quantity of the data, and deletes said information identifier from the storage in a case where the information identifier has coincided with said stored information identifier.

23. A mobile telephone terminal in a communication system that is configured of a mobile telephone network, the mobile telephone terminal making a connection with said mobile telephone network, a gateway device that is installed into said mobile telephone network, and an information server, in which said mobile telephone terminal makes communications with said information server through said gateway device, and said information server calculates a use charge of the mobile telephone network necessary for communications between said information server and said mobile telephone terminal, **characterized in** having the means for:
at the time of transmitting data, transmitting a terminal identifier for identifying its own terminal; and
transmitting information on received incoming data to said information server.

24. A program of an information server in a communication system that is configured of a mobile telephone network, a mobile telephone terminal making a connection with said mobile telephone network, a gateway device that is installed into said mobile telephone network, and the information server, in which said mobile telephone terminal makes communications with said information server through said gateway device, and said information server calculates a use charge of the mobile telephone network necessary for communications between said information server and said mobile telephone terminal, **characterized in** causing said information server to execute a process of calculating a communication rate in said mobile telephone network by means of a communication rate calculation equation for calculating the communication rate in said mobile telephone network based upon a quantity of data for communications with said mobile telephone terminal, from a quantity of outgoing data received from said mobile telephone terminal through said gateway device, and information on incoming data that is notified from said mobile telephone terminal, or said information on said incoming data that is notified from said gateway device, thereby to calculate the use charge.

25. The program according to claim 24, **characterized in** causing said information server to execute a process of specifying the mobile telephone network with which the mobile telephone terminal makes a connection, and calculating the use charge by means of the communication rate calculation equation that corresponds to the specified mobile telephone network.

26. The program according to one of claim 24 and claim 25, **characterized in:**
**that** the incoming data that is transmitted from said information server to said mobile telephone terminal is accompanied by an information identifier for identifying the incoming data, and said information on said incoming data is said information identifier accompanying said incoming data that said mobile telephone terminal has successfully received last; and
causing said information server to execute the processes of:
in a case of having transmitted the incoming data to said mobile telephone terminal, storing said information identifier accompanying the incoming data, and size of the data; and
in a case of having received said information on said incoming data from said mobile telephone terminal, calculating the communication rate in said mobile telephone network by means of said communication rate calculation equation, from said stored size of said data, and deleting said information identifier from the storage in a case where the information identifier has coincided with said stored information identifier.

27. The program according to one of claim 24 and claim 25, **characterized in:**
**that** the incoming data that is transmitted from said information server to said mobile telephone terminal is accompanied by an information identifier for identifying the incoming data, and said information on said incoming data is said information identifier accompanying the incoming data that said mobile telephone terminal has received last, and the received quantity of the incoming data; and
causing said information server to execute the processes of:
in a case of having transmitted the incoming data to said mobile telephone terminal, storing said information identifier accompanying the incoming data; and
in a case of having received said information on said incoming data from said mobile telephone terminal, calculating the communication rate in said mobile telephone network by means of said communication rate calculation equation, from the quantity of data, and deleting said information identifier from the storage in a case where the information identifier has coincided with said stored information identifier.

28. A program of a mobile telephone terminal in a communication system that is configured of the mobile telephone network, a mobile telephone terminal making a connection with said mobile telephone network, a gateway device that is installed into said mobile telephone network, and an information server, in which said mobile telephone terminal makes communications with said information server through said gateway device, and said information server calculates a use charge of the mobile telephone network necessary for communications between said information server and said mobile telephone terminal, **characterized in** causing said mobile telephone terminal to execute a process of:
at the time of transmitting data, transmitting a terminal identifier for identifying its own terminal; and
transmitting information on received incoming data to said information server.
